# EUROPEAN PATENT APPLICATION

(11) **EP 1 366 830 A1**
(43) Date of publication of application: **03.12.2003**
(21) Application number: 03425327.8
(22) Date of filing: 21.05.2003
(51) Int. Cl.: B08B 15/02, E04B 1/82

(54) **A device for isolating and sound-proofing tools for machining construction coating plates**

(30) Priority: 28.05.2002 IT RN20020033
(71) Applicant: Filiaggi, Alberto, 61100 Pesaro (IT)
(72) Inventor: Filiaggi, Alberto, 61100 Pesaro (IT)
(74) Representative: Lanzoni, Luciano

(57) **Abstract**

A device for isolating and sound-proofing tools for machining construction coating plates comprises a plurality of walls (2) which delimit a chamber (3) for containing a coating plate (L) to be machined by means of a portable tool (U). One of the walls (2) has at least an access opening (19) for the introduction of the hands (M) of an operator (P) who holds the tool (U), and a wall positioned in proximity to the access opening (19) is constituted by transparent material, to allow the operator (P) to see into the chamber (3). Moreover, the chamber (3) is at least partially lined with sound-absorbing material (17).

## Description

The present invention relates to a device for isolating and sound-proofing tools for machining construction coating plates.

The present invention finds advantageous application within the field of machining construction coating plates, in particular for cutting tiles, floor tiles, skirting boards, marble plates, and all the construction materials for coating walls or stairs and floors, whereto the description that follows shall specifically refer without losing its general nature.

It is well known to everyone that use of the aforesaid cutting tools, called "flexible" tools in the technical jargon, is annoying, especially if used indoors, to cut plates to measure before their installation.

Such tools are highly noisy, due to the impact the cutting disk has on the material to be cut, and they produce a considerable quantity of dust that invades the entire work space. Moreover, the cutting operation may occasionally be dangerous for the operator, who must normally wear safety goggles. One can also easily image the discomfort to be tolerated, if the cutting operations are to be conducted within already furnished spaces, with their dwellers actually present.

An aim of the present invention is to overcome the aforementioned drawbacks, making available a device, provided with a chamber for isolating and sound-proofing the cutting tool, which allows to shelter the both the operator and any dwellers of the spaces where the tool operates from all annoyance, danger or discomfort.

These aims and others besides, which shall become more readily apparent from the description that follows, are achieved, in accordance with the present invention, as set out in the accompanying claims.

The invention is described more in detail hereafter with the aid of the drawings, which show an embodiment provided purely by way of non limiting example.
- Figure 1 shows a schematic side view of an embodiment of the device in question, in an operative phase.
- Figure 2 shows a schematic top view of a cutting tool usable within a chamber with which the device in question is provided.
- Figure 3 shows a schematic front view of the device in question, seen from the operator's side.
- Figure 4 shows a schematic top view of the same device.
- Figure 5 shows an additional side view of the same device.
- Figure 6 shows a schematic side view, similar to that of Figure 1, of an embodiment variation of the device in question, highlighting an intake fitting connectable to the device
- Figure 7 shows, a partially sectioned view of a detail of Figure 6, illustrating the aspirating means of the device in question.

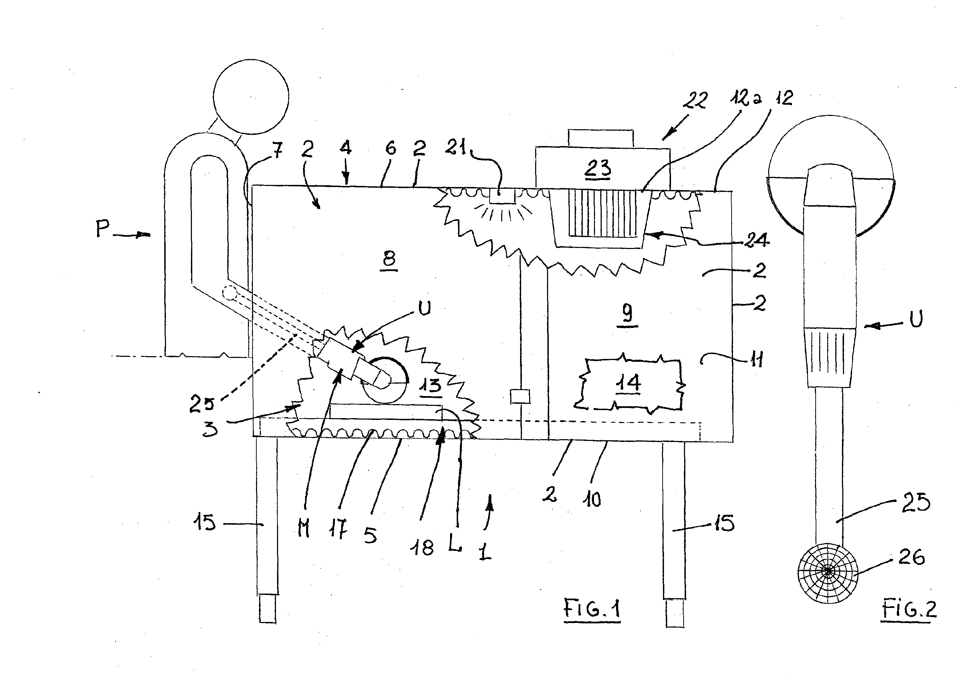

With reference to the figures, and in particular to Figure 1, the device 1 in question comprises a plurality of walls 2 which delimit a chamber 3 dimensioned to contain a coating plate L to be machined and a motorised portable tool U, preferably a cutting instrument, to perform the machining operation.

According to the preferred and illustrated embodiment, the device 1 comprises a first portion 4 substantially shaped according to a parallelepiped, defined by a base 5, an upper wall 6, a front wall 7 and two side walls 8. The first portion 4 is closed posteriorly by a second wedge portion 9 having a base 10, two side walls 11, arranged side by side along a respective edge, and an upper wall 12.

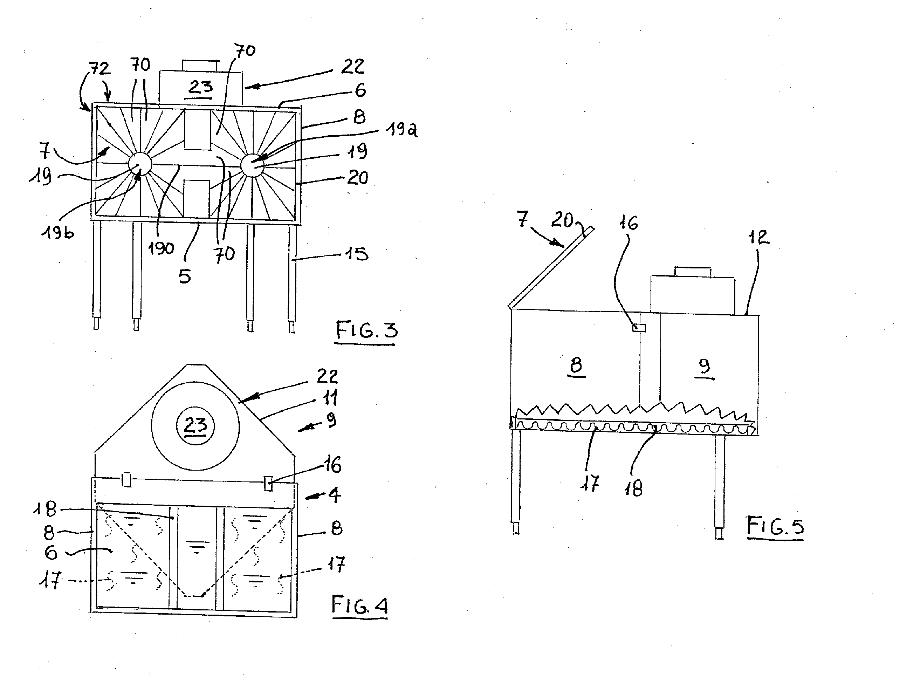

More specifically, as Figure 4 clearly shows, the second portion 9 has substantially triangular plan shape and, preferably, the angle formed between the two side walls 11 is a right angle.

The walls of the first portion 4 delimit a first compartment 13 open posteriorly, whereas the walls of the second portion 9 delimit a second compartment 14 open anteriorly. The two compartments 13, 14 face each other to form the chamber 3 together.

The device 1 further comprises a plurality of supporting legs 15, preferably four and telescopic, mounted able to slide in the two portions 4, 9. In the embodiment illustrated in Figure 1, the height of the legs 15 is such as to allow an operator P to work while kneeling in front of the device 1, or standing.

The first and the second portion 4, 9 are removably associated to each other by means of a series of hooks 16. Moreover, the vertical dimension of the second portion 9 is slightly smaller than that of the first one 4, so that, once the device is disassembled, the second portion 9 can be inserted into the first one 4 to reduce size and facilitate transport (Figure 4, dashed line).

The substantially prismatic shape of the second portion 9 also allows to position the invention in correspondence with corners of the spaces, limiting its occupied space and improving its stability.

Moreover, the same prismatic shape allows the diagonal housing of a coating plate L to be cut, with two of the respective edges associated to the two side walls 11 of the second portion 9.

Advantageously, the chamber 3 is at least partially lined with a layer of sound-absorbing material 17. More specifically, the walls 2 which delimit the chamber 3 are covered on the respective inner faces with a sound-absorbing and fire retarding sponge, in order partially to attenuate the noise generated during the machining operation.

Inside the chamber 3 are also mounted support means 18 whereon the coating plate L is set down during the machining operation.

Advantageously, the support means 18 comprise two parallel and mutually distanced strips 18, removably positioned on the bases 5, 10 of the respective portions 4, 9. In the illustrated embodiment, the two strips 18 extend from the front wall 7 of the first portion 4 towards the side walls 11 of the second portion 9.

Since the operator P performing the machining work must hold the tool U inside the chamber 3, one of the walls 2 has an access opening 19 for the introduction of the hands M of the operator P.

Preferably, the access opening 19 is obtained in the front wall 7 of the first portion 4 and is defined by two circular holes 19a, 19b of such size as to allow the insertion of a forearm into each (Figure 3).

Moreover, the front wall 7 is made of deformable material, for instance soft robber, not coated by the sound-absorbing material 17, so that the movements of the operator P during the machining operation or while introducing/extracting his/her arms into and out of the chamber 3 will not cause any accidental damage thereto.

Preferably, to improve sound-proofing, the front wall 7 is formed by a first and by a second layer of soft rubber, mutually distanced, to form an air gap between them.

The rubber layers are mounted on a frame 20 which, as shown in Figure 5, is hinged to the device 1 and serves as an access door to the chamber 3, necessary to introduce or extract both the coating plate L and the portable tool U.

Advantageously, in the wall 7 made of deformable material is also provided a horizontal slot 190 which allows the insertion of the coating plate L into the chamber 3, with no need to open the frame 20. Moreover, the horizontal slot 190 can connect the two holes 19a, 19b to each other. It is thereby possible also to obtain an access opening 19 which, incorporating the horizontal slot 190 as well, can allow to introduce the tool U without opening the frame 20 and facilitate the introduction of the coating plate L together with the operator's hands. This result can also be obtained in other ways, depending on the characteristics and shape of the tool U.

In a preferred embodiment of the device 1, the wall 7 made of deformable material is divided into mutually adjacent sectors 70.

Two or more of them ideally border with each other through the horizontal slot 190. At the border between a sector 70 and the other, cuts may be provided which from the edge of the access opening 19 propagate to a predetermined distance therefrom to facilitate both the entry of the arms and the entry of the tool U and of the tile. All sectors 70 - possibly also in correspondence with the horizontal slot 190 - advantageously comprise superposed edges to prevent the accidental escape of dust. In any case the aspiration of dust within the chamber 3, described farther on, contributes to maintain the chamber 3 under a slight vacuum, facilitating its seal against the accidental escape of dust.

To allow the operator P to see into the chamber 3 during the machining operation, the wall positioned in proximity to the access opening 19 is advantageously constituted by transparent material, preferably a pane of non-reflecting glass. In the illustrated embodiment, said wall is defined on the upper wall 6 of the first portion 4.

The pane of transparent material is also removable, to facilitate cleaning operations.

Moreover, a lamp 21 can also be provided, fitted with luminosity regulator which, as shown in Figure 1, is located inside the chamber 3, on the upper wall 6 of the first portion 4.

Since, during the machining operations, the dust produced could damage the tool U and dirty the non-reflecting glass, the device 1 is provided with aspirating means 22 operatively active between the chamber 3 and the exterior environment, to expel the air contained in the chamber 3.

With reference to Figure 1, the aspirating means 22 are constituted by an aspirator 23 removably mounted in an appropriate hole 12a obtained on the upper wall 12 of the second portion 9.

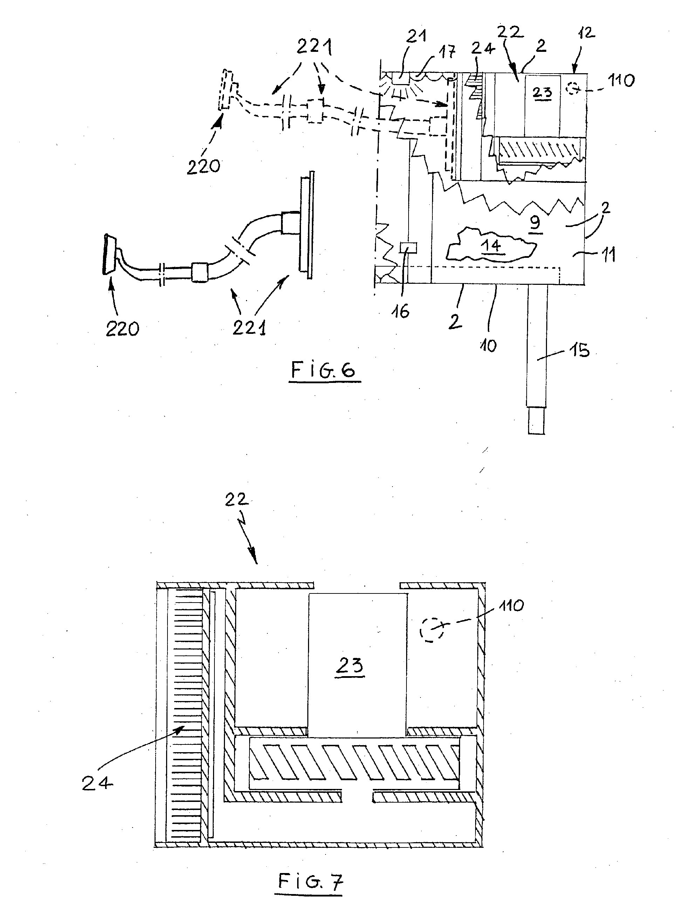

With reference to Figures 6 and 7, the aspirating means 22 (and the related aspirator 23) can also be recessed within the chamber 3, in an appropriate recessed seat. In particular, the aspirating means 22 can be located in the upper part of the wedge-shaped end of the second portion 9 in correspondence with the area where the two side walls 11 merge onto one another. Openings 110 can be provided in the side walls 11 for the escape of the air. In general, the aspirating means 22 may be connected to a remote unit for filtering and/or storing dust (not shown herein) by means of appropriate connecting means (not shown). Figure 7 shows the detail of the aspirating means 22 with the related recessed structure and the channels for the passage of the air.

The aspirator 23 is generally provided with a filter 24 to withhold the dust produced by the machining operation, which saturates the air contained in the chamber 3.

The device 1 and the tool U constitute a kit for machining construction coating plates.

Advantageously, the tool U is provided with an aspiration tube 25 for the cooling air which, when the tool U is used in the chamber 3, draws air from the exterior environment.

The tube 25 is of the flexible type, to avoid hampering the operator during the machining operations, and it has at its free end, which remains external to the chamber 3, a holed metallic sphere 26 through which it intakes air.

Advantageously, moreover, the tool U and the aspirator 23 are connected to each other, so that turning the tool U on and off causes the automatic activation/deactivation of the aspirator 23.

The kit can advantageously comprise also at least an intake fitting 220, removably connectable to the intake means 22 by means of related connecting means 221 and extractable, even when connected, outside the chamber 3.

The device 1 can thus be used directly as a vacuum cleaner to aspirate any dust which may have been produced outside the chamber 3 in the work space.

Appropriately, in this case, the aspirating means 22 should comprise the filter 24 and/or be connected to the remote filtering and/or storage unit (not shown herein).

In Figure 6, the fitting 220 and the related connecting means 221 are shown both removed from the device 1 and connected to the intake means 22 (see the part illustrated in dashed lines). The figure shows that, if the first and the second portions 4, 9 can be removed from each other and the aspirating means 22 are associated to the second portion 9, advantageously the second portion 9 can also be used directly as a vacuum cleaner.

In use, the operator P assembles the device in the space where (s)he is to work, for instance the kitchen of a flat.

(S)he extracts the second portion 9 from the first one 4 and secures it acting on the hooks 16.

Subsequently, (s)he extracts the legs 15 and positions the device 1 against a wall, preferably associating the side walls 11 of the second portion 9 to two walls of the room forming an angle between them.

(S)he mounts the strips 18 into the chamber 3 and positions the aspirator 23 in the hole 12a.

After connecting both the aspirator 23 and the cutting tool U to an energy source, typically the electrical system of the flat, and starting the aspirator 23, the operator P inserts a plate to be cut L and the tool U into the chamber 3 through the access door 20. After repositioning the door 20, (s)he inserts his/her arms through the holes 19 to grab the tool U and proceed to cut the floor tile L.

Alternatively, when the access opening 19 is provided with the horizontal slot 190 or is appropriately shaped, the operator P inserts through them both the tile L to be cut and the tool U with no need to handle the access door 20, and is immediately ready to work.

During the operation, his/her arms close the only openings of the chamber 3 (the holes 19) and consequently the chamber 3 remains materially and acoustically isolated from the surrounding environment.

At the end of the cutting operations and of the work, using the intake fitting 220, the operator may clean the environment outside the chamber 3 from the residual dust or from the residual dirt which may have been produced due to all the operations performed in the work environment.

The invention achieves important advantages.

First of all, the one deriving from the capability of reducing discomfort for the operator and for any dwellers of the environment where work is performed on tiles, floor tiles, skirting boards, marble plates, etc..

The device according to the present invention allows considerably to reduce the noisiness due to the work, which is propagated into the surrounding environment, by up to about 80%.

The device according to the present invention allows to limit the emission of dust, with a reduction of up to 98% relative to the use of tools without the present device.

Moreover, the device according to the present invention protects the operator from any fragments which, removed from the tile, are projected by the tool.

Lastly, the device according to the present invention is simple to build, easy to disassemble and transport.

The invention thus conceived can be subject to numerous modifications and variations, without thereby departing from the scope of the inventive concept that characterises it. Moreover, all details can be replaced with other, technically equivalent, elements. In practice, all materials used, as well as the dimensions, may be any, depending on requirements.

## Claims

1. Device for isolating tools for machining construction coating plates, **characterised in that** it comprises:
a plurality of walls (2) delimiting a chamber (3) for containing at least a coating plate (L) to be worked by means of a portable tool (U); at least one of said walls (2) having at least an access opening (19) for the introduction of the hands (M) of an operator (P) who holds the tool (U); at least one of said walls (2), positioned in proximity to the access opening (19), being constituted by transparent material, to allow the operator (P) to see into the chamber (3).

2. Device as claimed in claim 1, **characterised in that** a wall (7) of said plurality of walls (2) is made of deformable material and the access opening (19) is obtained in said wall (7).

3. Device as claimed in claim 2, **characterised in that** in the wall (7) made of deformable material is also provided a horizontal slot (190) which allows the insertion of the coating plate (L) into the chamber (3).

4. Device as claimed in claim 3, **characterised in that** the access opening (19) comprises at least two holes (19a, 19b) mutually connected by the horizontal slot (190).

5. Device as claimed in any of the claims 2 to 4, **characterised in that** the wall (7) made of deformable material is subdivided into mutually adjacent sectors (70).

6. Device as claimed in any of the previous claims, **characterised in that** it comprises a first portion (4) substantially shaped as a parallelepiped, having a base (5), an upper wall (6), a front wall (7), and two side walls (8) defining a first compartment (13) open posteriorly, as well as a second wedge shaped portion (9) having a base (10), two side walls facing each other (11) along a respective edge and an upper wall (12) defining a second compartment (14) open anteriorly, said first and second compartment (13, 14) facing each other to form the chamber (3).

7. Device as claimed in claim 6, **characterised in that** the second wedge shaped portion (9) has a substantially triangular plan shape.

8. Device as claimed in claim 7, **characterised in that** the two side walls (11) form a right angle between them.

9. Device as claimed in claim 6, **characterised in that** the first (4) and the second (9) portion are removably associated to each other.

10. Device as claimed in claim 6, **characterised in that** the upper wall (6) of the first portion (4) defines the wall constituted by transparent material.

11. Device as claimed in claim 6, **characterised in that** said at least one access opening (19) is obtained in the front wall (7) of the first portion (4).

12. Device as claimed in any of the claims from 1 to 5, **characterised in that** it further comprises aspirating means (22) operatively active between the chamber (3) and the exterior environment, to expel the air contained in the chamber (3) and saturated with the dust produced by the machining operation.

13. Device as claimed in any of the claims from 6 to 11, **characterised in that** it further comprises aspirating means (22) operatively active between the chamber (3) and the exterior environment, to expel the air contained in the chamber (3) and saturated with the dust produced by the machining operation.

14. Device as claimed in claim 13, **characterised in that** the aspirating means (22) are mounted on the second portion (9) of the device (1).

15. Device as claimed in claim 12 or 13 or 14, **characterised in that** the aspirating means (22) comprise a filter (24) to retain the dust produced by the machining operation.

16. Device as claimed in any of the claims from 12 to 15, **characterised in that** the aspirating means (22) are recessed within the chamber (3).

17. Device as claimed in any of the previous claims, **characterised in that** said chamber (3) is at least partially lined with sound-absorbing material (17).

18. Device as claimed in any of the previous claims, **characterised in that** it further comprises a plurality of supporting legs (15), telescopically extensible.

19. Device as claimed in any of the previous claims, **characterised in that** it further comprises support means (18) for the coating plate (L) mounted inside the chamber (3).

20. Kit for machining construction coating plates, comprising a portable tool (U), **characterised in that** it comprises a device (1) for isolating and sound-proofing tools for machining construction coating plates as claimed in one or more of the claims from 1 to 11 or as claimed in any of the claims from 17 to 19.

21. Kit for machining construction coating plates, comprising portable tool (U), **characterised in that** it comprises a device (1) for isolating and sound-proofing tools for working construction coating plates as claimed in one or more of the claims from 12 to 16.

22. Kit for machining construction coating plates as claimed in claim 20 or 21, **characterised in that** it further comprises at least an intake fitting (220), removably connectable to the aspirating means (22) by related connecting means (221) and extractable, even when connected, outside the chamber (3).

23. Kit as claimed in claim 20 or 21 or 22 **characterised in that** said tool (U) is a cutting instrument.

24. Kit as claimed in claim 20 or 21 or 22 or 23 **characterised in that** said tool (U) has a tube (25) for aspirating the cooling air which, during the use of the tool (U) in the chamber (3), draws in air from the exterior environment.
